# FASCICULE DE BREVET EUROPEEN

(11) **EP 3 013 609 B1**
(45) Date de publication et mention de la délivrance du brevet: **07.06.2017**
(21) Numéro de dépôt: 14738757.5
(22) Date de dépôt: 26.06.2014
(51) Int. Cl.: B60C 15/04

(54) **TRINGLE POUR PNEUMATIQUE, PNEUMATIQUE ET PROCÉDÉ DE FABRICATION**
REIFENWULST,REIFEN UND HERSTELLUNGSVERFAHREN
TIRE BEAD, TIRE AND MANUFACTURING PROCESS

(30) Priorité: 28.06.2013 FR 1356250
(43) Date de publication de la demande: 04.05.2016
(73) Titulaire: Compagnie Générale des Etablissements Michelin, 63000 Clermont-Ferrand (FR); Michelin Recherche et Technique S.A., 1763 Granges-Paccot (CH)
(72) Inventeur: GIRAUD, Michel, F-63040 Clermont-Ferrand Cedex 9 (FR); MULLER, Anne-Lise, F-63040 Clermont-Ferrand Cedex 9 (FR); GRAVIER, Jérôme, F-63040 Clermont-Ferrand Cedex 9 (FR)
(74) Mandataire: Desbordes, Guillaume
(86) Numéro de dépôt international: PCT/EP2014/063572
(87) Numéro de publication internationale: WO 2014/207129

(56) Documents cités:
- EP-A1- 1 350 639
- JP-A- 2006 347 379
- JP-A- 2010 000 827
- US-A- 5 205 883

## Description

L'invention concerne une tringle pour pneumatique, un pneumatique ainsi que son procédé de fabrication. L'invention s'applique à tout type de pneumatiques, notamment aux pneumatiques de véhicules industriels choisis parmi les véhicules à moteur de type tourisme, SUV ("*Sport Utility Vehicles*"), deux roues (notamment vélos, motos), les véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention.

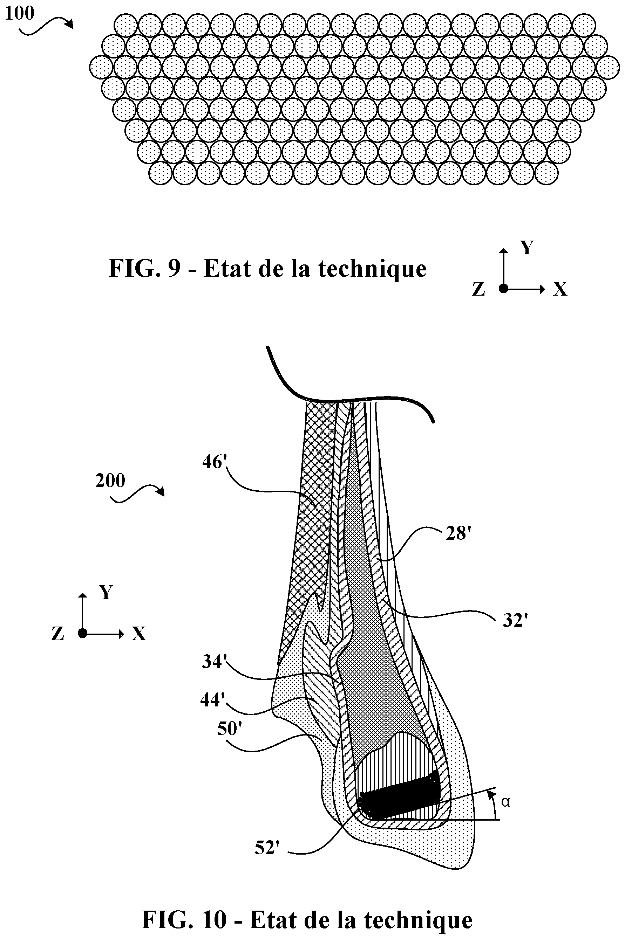

On connait de l'état de la technique un pneumatique comprenant un sommet comprenant une armature de sommet surmontée d'une bande de roulement. Deux flancs prolongent le sommet radialement vers l'intérieur. Le pneumatique comporte deux bourrelets radialement intérieurs aux flancs et comportant chacun une structure annulaire de renfort. La structure annulaire de renfort comprend une tringle sensiblement de révolution autour d'un axe comprenant plusieurs enroulements d'au moins un fil agencés axialement les uns à côté des autres sur plusieurs couches radialement superposées les unes sur les autres. Le fil présente une section sensiblement circulaire. Une telle tringle est généralement appelée TPFR (Tringle Paquet Fils Ronds). La tringle de l'état de la technique, illustrée à la figure 9, peut être nue ou bien habillée par une masse de gomme d'habillage.

Le document US5205883 montre une tringle selon le préambule de la revendication 1.

Le pneumatique comporte également une armature de carcasse radiale s'étendant depuis les bourrelets à travers les flancs vers le sommet. L'armature de carcasse comporte une ou plusieurs nappes de carcasse, au moins une de ces nappes de carcasse étant ancrée dans chacun des bourrelets par un retournement autour de la structure annulaire de renfort, au contact de la tringle ou de son habillage, de manière à former, dans chaque bourrelet, un brin aller s'étendant radialement entre chaque bourrelet à travers les flancs et le sommet, et un brin retour s'étendant radialement depuis chaque bourrelet à travers chaque flanc.

Chaque bourrelet comprend une masse de gomme de bourrage agencée, au contact de la tringle ou de son habillage, dans un espace délimitée par les brins aller et retour. Chaque bourrelet comprend également des masses de gomme additionnelles agencées axialement à l'extérieur du brin retour.

Lors de l'utilisation du pneumatique sur un véhicule, le pneumatique est monté sur une roue comprenant une jante. La force motrice du véhicule, généralement générée par son moteur, est transmise au pneumatique via une transmission. Dans le cas où la force motrice est très élevée, il arrive que le pneumatique glisse par rapport à la jante si bien que la force motrice ne peut être intégralement transmise au pneumatique ce qui diminue le rendement du véhicule. Ce phénomène, appelé rotation sur jante est d'autant plus pénalisant que l'on utilise des véhicules générant une grande force motrice.

En outre, lors de la fabrication du pneumatique de l'état de la technique, que l'on réalise par exemple sur un tambour d'assemblage, on pose la tringle sur la nappe de carcasse et on retourne le brin retour autour de la tringle. Puis, on fait tourner la nappe de carcasse et la tringle l'une par rapport à l'autre. Lors de cette rotation, la masse de gomme de bourrage ainsi que le retournement de la nappe carcasse comprenant le brin aller et le brin retour frottent contre la tringle ou son habillage ce qui crée un couple dit freineur empêchant la rotation relative de la tringle par rapport au reste du pneumatique, notamment par rapport à la nappe de carcasse.

Le couple freineur provoque une mise en compression du brin retour de la nappe de carcasse ainsi que des masses de gomme additionnelles agencées axialement à l'extérieur du brin retour. Le couple freineur provoque également une mise en surtension du brin aller de la nappe de carcasse. Sous l'effet de la surtension du brin aller, les enroulements de la tringle, notamment des enroulements au contact du brin aller surtendu sont désorganisés. De plus, les frottements conduisent à une rotation relative limitée qui empêche l'orientation correcte de la tringle dans le pneumatique.

Lorsqu'ils surviennent, ces problèmes potentiels, volontairement illustrés de façon exagérée sur la figure 10, conduisent à la mise au rebus du pneumatique.

L'invention a pour but de réduire la rotation sur jante sous l'effet de la force motrice et de fournir une tringle permettant de réduire le nombre de pneumatiques mis au rebus à cause d'un problème généré par le couple freineur.

A cet effet, l'invention a pour objet une tringle pour pneumatique sensiblement de révolution autour d'un axe comprenant plusieurs enroulements d'au moins un fil agencés axialement les uns à côté des autres sur N couches Cᵢ radialement superposées les unes sur les autres, la tringle pour pneumatique comprenant une tringle hexagonale de base comprenant :
- une couche radialement externe de N1 enroulements,
- une couche radialement interne de N1 enroulements,
- deux alignements latéraux axialement et radialement externes de N2 enroulements opposés axialement l'un par rapport à l'autre,
- deux alignements latéraux axialement externes et radialement internes de N2 enroulements opposés axialement l'un par rapport à l'autre, avec N1=N2 + 1 ou N1=N2,
- deux jonctions chacune formée par un enroulement commun entre un alignement latéral axialement et radialement externe et un alignement latéral axialement externe et radialement interne, chaque enroulement commun formant chaque jonction étant dépourvu, axialement à l'extérieur, d'enroulement du fil,
tringle pour pneumatique comprenant également au moins deux alignements additionnels latéraux axialement externes et radialement internes, chaque alignement additionnel latéral axialement externe et radialement interne étant sensiblement parallèle respectivement à chaque alignement latéral axialement externe et radialement interne.

Par alignement, on entend une juxtaposition selon une direction principale sensiblement rectiligne de plusieurs enroulements agencés au contact deux à deux les uns des autres.

Par alignement latéral, on entend un alignement dont la direction principale est inclinée par rapport à la direction axiale du pneumatique.

Par couche, on entend un alignement s'étendant selon une direction principale sensiblement parallèle à la direction axiale du pneumatique.

Deux alignements sont sensiblement parallèles si les directions principales selon lesquelles ils s'étendent sont sensiblement parallèles l'une à l'autre.

On dit également d'une couche de la tringle hexagonale de base, qu'elle est « radialement externe » si la direction principale selon laquelle elle s'étend est plus éloignée de l'axe de rotation du pneumatique que celles des autres couches de la tringle hexagonale de base. A l'inverse, on dit d'une couche de la tringle hexagonale de base, qu'elle est « radialement interne » si la direction principale selon laquelle elle s'étend est plus proche de l'axe de rotation du pneumatique que celles des autres couches de la tringle hexagonale de base.

On dit d'un alignement latéral de la tringle hexagonale de base qu'il est « axialement et radialement externe » si la direction principale selon laquelle il s'étend est axialement et radialement plus éloignée du centre de la tringle hexagonale de base que celles des autres alignements latéraux de la tringle hexagonale de base lorsqu'on se déplace axialement de l'intérieur vers l'extérieur de la tringle hexagonale de base et radialement de l'intérieur vers l'extérieur du pneumatique. A l'inverse, on dit d'un alignement latéral de la tringle hexagonale de base qu'il est « axialement externe et radialement interne » si la direction principale selon laquelle il s'étend est axialement et radialement plus éloignée du centre de la tringle hexagonale de base que celles des autres alignements latéraux de la tringle hexagonale de base lorsqu'on se déplace axialement de l'intérieur vers l'extérieur de la tringle hexagonale de base et radialement de l'extérieur vers l'intérieur du pneumatique.

On appliquera les mêmes définitions aux couches, alignements et couvertures additionnels de la tringle pour pneumatique.

La tringle selon l'invention présente une faible rotation sur jante ce qui améliore le rendement du véhicule sur lequel un pneumatique la comportant est monté. En effet, chaque alignement additionnel latéral axialement externe et radialement interne améliore l'ancrage du bourrelet dans la jante et réduit le glissement potentiel entre la jante et le pneumatique. En outre, la faible rotation sur jante permet d'éviter le frottement du pneumatique contre la jante et donc la dégradation du bourrelet qui serait susceptible de dégrader l'endurance du pneumatique.

En outre, la tringle selon l'invention permet de réduire voire de supprimer le nombre de pneumatiques mis au rebus à cause d'un problème généré par le couple freineur. En effet, la tringle selon l'invention présente une dimension selon la direction axiale relativement proche de la dimension selon la direction radiale. Ainsi, la section de la tringle selon l'invention est relativement proche d'une section de forme générale circulaire ce qui favorise la rotation relative et limite donc le couple freineur contrairement à la tringle de l'état de la technique.

La forme particulière de la tringle selon l'invention favorisant la rotation relative est due, d'une part, à la forme hexagonale de la tringle de base et, d'autre part, aux alignements additionnels latéraux axialement externes et radialement internes, permettant, en combinaison, de rapprocher la section de la tringle selon l'invention d'une section de forme générale circulaire.

De façon implicite, chaque alignement additionnel latéral axialement externe et radialement interne est agencé axialement à l'extérieur respectivement par rapport à chaque alignement latéral axialement externe et radialement interne.

On dit d'un premier alignement qu'il est agencé axialement à l'extérieur par rapport à un deuxième alignement si la direction principale selon laquelle il s'étend est plus éloignée du centre de la tringle que celle du deuxième alignement lorsqu'on se déplace selon une direction sensiblement parallèle à la direction axiale du pneumatique. A l'inverse, on dit d'un premier alignement qu'il est agencé axialement à l'intérieur par rapport à un deuxième alignement si la direction principale selon laquelle il s'étend est plus proche du centre de la tringle que celle du deuxième alignement lorsqu'on se déplace selon une direction sensiblement parallèle à la direction axiale du pneumatique.

Avantageusement, la tringle pour pneumatique comprend deux paires d'alignements additionnels latéraux axialement externes et radialement internes respectivement de N5 et N6 enroulements, chaque alignement additionnel latéral axialement externe et radialement interne étant sensiblement parallèle respectivement à chaque alignement latéral axialement externe et radialement interne. Grâce aux deux paires d'alignements additionnels latéraux axialement externes et radialement internes, on réduit encore davantage la rotation sur jante du pneumatique.

Optionnellement, N5≥N6, de préférence N5>N6 et plus préférentiellement N5=N6+2.

Dans un mode de réalisation, chaque enroulement radialement interne de chaque alignement additionnel latéral axialement externe et radialement interne est radialement sensiblement aligné avec la couche radialement interne.

Dans un autre mode de réalisation, la tringle pour pneumatique comprend au moins une couverture additionnelle axialement externe et radialement interne d'enroulements en forme générale de U.

De façon avantageuse, la tringle comprend une telle couverture additionnelle lorsque N1<7 et de préférence lorsque N1<6. En effet, la réduction de N1 entraîne une augmentation du risque de rotation sur jante et de la pression de la jante sur chaque enroulement de la tringle. Il est donc préférable de rajouter une couverture pour réduire ce risque et mieux répartir la pression exercée par la jante sur la tringle.

De façon implicite, les enroulements de la couverture additionnelle axialement externe et radialement interne sont agencés axialement à l'extérieur par rapport à chaque alignement latéral axialement externe et radialement interne et radialement à l'intérieur par rapport à la couche radialement interne.

On dit des enroulements d'une couverture qu'ils sont agencés axialement à l'extérieur par rapport à un alignement si la direction principale selon laquelle les enroulements de la couverture s'étendent parallèlement à celle de l'alignement est plus éloignée du centre de la tringle que celle de l'alignement qu'ils couvrent lorsqu'on se déplace selon une direction sensiblement parallèle à la direction axiale du pneumatique.

On dit des enroulements d'une couverture qu'ils sont agencés radialement à l'intérieur par rapport à une couche si la direction principale selon laquelle les enroulements de la couverture s'étendent parallèlement à celle de la couche est plus proche de l'axe du pneumatique que celle de la couche qu'ils couvrent lorsqu'on se déplace selon une direction sensiblement parallèle à la direction radiale du pneumatique.

De préférence, la couverture additionnelle axialement externe et radialement interne comprend :
- une couche additionnelle radialement interne de N7 enroulements, et sensiblement parallèle à la couche radialement interne,
- au moins les deux alignements additionnels latéraux axialement externes et radialement internes.

De façon implicite, la couche additionnelle radialement interne est agencée radialement à l'intérieur par rapport à la couche radialement interne.

On dit d'une première couche qu'elle est agencée radialement à l'intérieur d'une deuxième couche si la direction principale selon laquelle elle s'étend est plus proche de l'axe du pneumatique que celle de la deuxième couche selon une direction sensiblement parallèle à la direction radiale du pneumatique.

De préférence, la couverture additionnelle axialement externe et radialement interne comprend une unique couche additionnelle radialement interne de N7 enroulements, et sensiblement parallèle à la couche radialement interne.

De préférence, N7=N1+1.

Avantageusement, chaque alignement additionnel latéral axialement externe et radialement interne comprenant N5 enroulements, N5≤N2, de préférence N5=N2, N5+1=N2 ou N5+2=N2.

Préférentiellement, max(Lᵢ)=N-1, max(Lᵢ)=N ou max(Lᵢ)=N+1 avec Lᵢ est le nombre d'enroulements de chaque couche Cᵢ, i variant de 1 à N inclus. Ainsi, la tringle présente une dimension selon la direction axiale aussi proche que possible de la dimension selon la direction radiale.

Avantageusement, la tringle pour pneumatique comprend au moins une couche Cₖ avec k ∈ ]1, N[ telle que Lₖ₊₁ > Lₖ et Lₖ < Lₖ₋₁. Ainsi, la tringle est plus robuste lorsqu'on la manipule. En effet, grâce à cette caractéristique, on prend appui sur plusieurs enroulements axialement externes, ici ceux des couches Cₖ₊₁ et Cₖ₋₁ contrairement à la tringle de l'état de la technique pour laquelle on prend appui sur un unique enroulement axialement externe. Ainsi, on limite les efforts exercés sur chacun de ces enroulements axialement externes et le risque de désorganiser la tringle.

De préférence, pour chaque couche Cₖ avec k ∈ ]1, N[ telle que Lₖ₊₁ > Lₖ et Lₖ < Lₖ₋₁, on a Lₖ₊₁=Lₖ+1 et Lₖ+1=Lₖ₋₁.

Optionnellement, la tringle pour pneumatique comprend également au moins deux alignements additionnels latéraux axialement et radialement externes, chaque alignement additionnel latéral axialement et radialement externe étant sensiblement parallèle respectivement à chaque alignement latéral axialement et radialement externe.

On réduit ainsi davantage le couple freineur lors du procédé de fabrication. En effet, la forme particulière de la tringle favorise davantage la rotation relative en raison, d'une part, de la forme hexagonale de la tringle de base et, d'autre part, des alignements additionnels latéraux axialement et radialement externes, permettant, en combinaison, de rapprocher la section de la tringle selon l'invention d'une section de forme générale circulaire.

De façon implicite, chaque alignement additionnel latéral axialement et radialement externe est agencé axialement à l'extérieur respectivement par rapport à chaque alignement latéral axialement et radialement externe.

De préférence, la tringle comprend deux, et seulement deux, alignements additionnels latéraux axialement et radialement externes, chaque alignement additionnel latéral axialement et radialement externe étant sensiblement parallèle respectivement à chaque alignement latéral axialement et radialement externe.

Dans un mode de réalisation, chaque enroulement radialement externe de chaque alignement additionnel latéral axialement et radialement externe est radialement sensiblement aligné avec la couche radialement externe.

Dans un autre mode de réalisation, la tringle comprend au moins une couverture additionnelle axialement et radialement externe d'enroulements en forme générale de U.

Avantageusement, la couverture permet ainsi de rapprocher encore davantage la section de la tringle d'une section de forme générale circulaire.

De façon implicite, les enroulements de la couverture additionnelle axialement et radialement externe sont agencés axialement à l'extérieur par rapport à chaque alignement latéral axialement et radialement externe et radialement à l'extérieur par rapport à la couche radialement externe.

On dit des enroulements d'une couverture qu'ils sont agencés radialement à l'extérieur par rapport à une couche si la direction principale selon laquelle les enroulements de la couverture s'étendent parallèlement à celle de la couche est plus éloignée de l'axe du pneumatique que celle de la couche qu'ils couvrent lorsqu'on se déplace selon une direction sensiblement parallèle à la direction radiale du pneumatique.

Avantageusement, la couverture additionnelle axialement et radialement externe comprend :
- une couche additionnelle radialement externe de N4 enroulements, et sensiblement parallèle à la couche radialement externe,
- au moins les deux alignements additionnels latéraux axialement et radialement externes.

De façon implicite, la couche additionnelle radialement externe est agencée radialement à l'extérieur par rapport à la couche radialement externe.

On dit d'une première couche qu'elle est agencée radialement à l'extérieur par rapport à une deuxième couche si la direction principale selon laquelle elle s'étend est plus éloignée de l'axe du pneumatique que celle de la deuxième couche selon une direction sensiblement parallèle à la direction radiale du pneumatique.

De préférence, la couverture additionnelle axialement et radialement externe comprend une unique couche additionnelle radialement externe de N4 enroulements, et sensiblement parallèle à la couche radialement externe.

Avantageusement, afin de rapprocher encore davantage la section de la tringle d'une section de forme générale circulaire, max(Lᵢ)-N1≤6, i variant de 1 à N. On a préférentiellement max(Lᵢ)-N1≤2, i variant de 1 à N pour max(Lᵢ)≤9 et max(Lᵢ)-N1≤6, i variant de 1 à N pour max(Lᵢ)>9.

De préférence, N4=N1+1. Ainsi, la couverture additionnelle épouse la forme générale de la tringle hexagonale de base ce qui favorise la rotation relative de la nappe de carcasse sur la couche additionnelle radialement externe.

Avantageusement, chaque alignement additionnel latéral axialement et radialement externe comprenant N3 enroulements, N3≤N2, de préférence N3=N2, N3+1=N2 ou N3+2=N2.

N3≤N2, de préférence N3=N2, N3+1 =N2 ou N3+2=N2. De façon analogue, la couverture additionnelle épouse la forme générale de la tringle hexagonale de base ce qui favorise la rotation relative de la nappe de carcasse sur les alignements additionnels latéraux axialement et radialement externes.

Selon d'autres caractéristiques optionnelles de la tringle pour pneumatique indépendantes les unes des autres:
- La tringle hexagonale de base présente un plan de symétrie axial.
- La tringle hexagonale de base présente un plan de symétrie radial.
- La tringle pour pneumatique présente un plan de symétrie axial.
- La tringle pour pneumatique est obtenue par superpositions successives des N couches Cᵢ, chaque couche Cᵢ étant obtenue par enroulements axialement successifs d'au moins un fil.
- La tringle pour pneumatique comprend un unique fil formant les enroulements des N couches Cᵢ.
- Le ou chaque fil est métallique.
- Le ou chaque fil est réalisé dans un acier au carbone comprenant entre 0,6 et 0,9% en masse de carbone.
- Le ou chaque fil présente une section sensiblement circulaire.
- Le ou chaque fil présente un diamètre compris entre 1 et 3,2 mm, de préférence entre 1,2 et 2,2 mm et plus préférentiellement entre 1,2 et 2 mm.
- N ≥ 5, de préférence N ≥ 7 et plus préférentiellement N ≥ 9.
- max(Lᵢ) ≥ 4, de préférence max(Lᵢ) ≥ 6 et plus préférentiellement max(Lᵢ) ≥ 9.
- Le nombre total d'enroulements de la tringle est supérieur ou égal à 30, de préférence à 50 et plus préférentiellement à 70.
- |Lₖ₊₁ - Lₖ| =1 pour i variant de 1 à N inclus.

L'invention a également pour objet un pneumatique comprenant:
- au moins un bourrelet comprenant au moins une tringle pour pneumatique telle que définie ci-dessus,
- une armature de carcasse comprenant au moins une nappe de carcasse ancrée dans chaque bourrelet par un retournement autour de la tringle.

L'invention a pour autre objet un procédé de fabrication d'un pneumatique tel que défini ci-dessus dans lequel:
- on pose la tringle sur la nappe de carcasse,
- on retourne une partie de la nappe de carcasse autour de la tringle, et
- on fait tourner la nappe de carcasse et la tringle l'une par rapport à l'autre.

L'invention sera mieux comprise à la lecture de la description qui va suivre, donnée uniquement à titre d'exemple non limitatif et faite en se référant aux dessins dans lesquels:
- la figure 1 est une vue en coupe radiale d'un pneumatique selon l'invention ;
- la figure 2 est une vue détaillée en coupe de la zone I du pneumatique de la figure 1 ;
- la figure 3 est une vue en coupe d'une tringle selon un premier mode de réalisation de l'invention;
- les figures 4a, 4b, 4c et 4d sont des vues en coupe illustrant différentes étapes du procédé de fabrication selon l'invention ;
- les figures 5 à 8 sont des vues analogues à celle de la figure 3 de tringles respectivement selon des deuxième, troisième, quatrième et cinquième modes de réalisation;
- la figure 9 est une vue analogue à celle de la figure 3 d'une tringle de l'état de la technique;
- la figure 10 est une vue analogue à celle de la figure 2 d'un bourrelet d'un pneumatique de l'état de la technique comprenant la tringle de la figure 9.

Le pneumatique selon l'invention présente une forme générale toroïdale autour d'un axe de rotation. Cet axe de rotation définit la direction axiale.

Dans l'emploi du terme « radial », il convient de distinguer plusieurs utilisations différentes du mot par la personne du métier lorsqu'on parle du pneumatique.

Premièrement, l'expression se réfère à un rayon du pneumatique. C'est dans ce sens qu'on dit d'un élément A qu'il est « radialement intérieur » à un élément B (ou « radialement à l'intérieur » de l'élément B) s'il est plus près de l'axe de rotation du pneumatique que l'élément B. Inversement, un élément C est dit « radialement extérieur à » un élément D (ou « radialement à l'extérieur » de l'élément D) s'il est plus éloigné de l'axe de rotation du pneumatique que l'élément D. On dira qu'on avance « radialement vers l'intérieur (ou l'extérieur) » lorsqu'on avance en direction des rayons plus petits (ou plus grands).

Deuxièmement, un élément de renfort ou une armature est dit « radial » lorsque l'élément de renfort ou les éléments de renfort de l'armature font avec la direction circonférentielle un angle supérieur ou égal à 65° et inférieur ou égal à 90°.

Troisièmement, par « coupe radiale » ou « section radiale » on entend ici une coupe ou une section selon un plan qui comporte l'axe de rotation du pneumatique.

Une direction « axiale » est une direction parallèle à l'axe de rotation du pneumatique. Un élément E est dit « axialement intérieur » à un élément F (ou «axialement à l'intérieur » de l'élément F) s'il est plus près du plan médian du pneumatique que l'élément F. Inversement, un élément G est dit « axialement extérieur à » un élément H (ou « axialement à l'extérieur » de l'élément H) s'il est plus éloigné du plan médian du pneumatique que l'élément H.

Le « plan médian » du pneumatique est le plan qui est normal à l'axe de rotation du pneumatique et qui se situe à équidistance des structures annulaires de renfort de chaque bourrelet.

Une direction « circonférentielle » est une direction qui est perpendiculaire à la fois à un rayon du pneumatique et à la direction axiale.

### EXEMPLE DE PNEUMATIQUE ET DE TRINGLE SELON L'INVENTION

Sur les figures suivantes, on a représenté des directions X, Y, Z correspondant à des orientations axiale (X), radiale (Y) et circonférentielle (Z) habituelles d'un pneumatique.

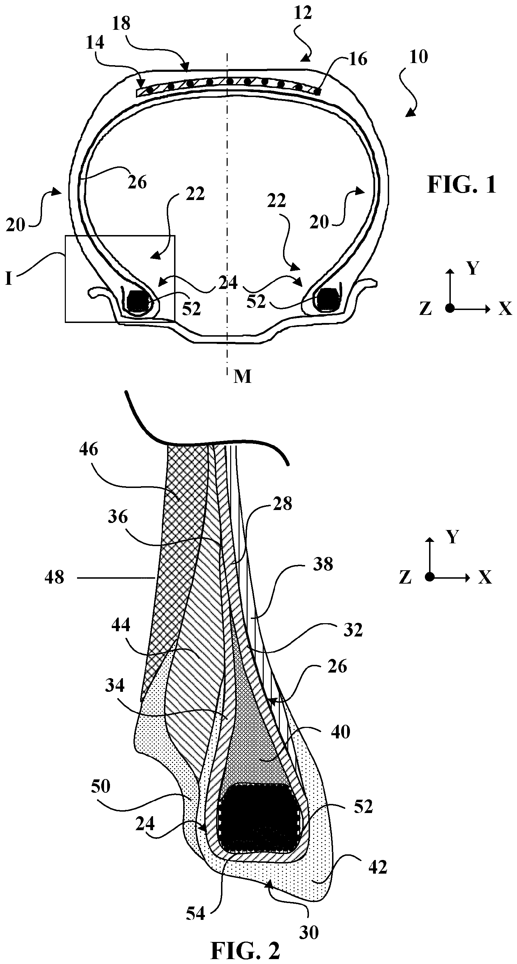

On a représenté sur les figures 1 et 2 un exemple de pneumatique conforme à l'invention et désigné par la référence générale 10. Le pneumatique 10 est préférentiellement destiné à un véhicule industriel choisi parmi les véhicules à moteur de type tourisme, SUV ("*Sport Utility Vehicles*"), deux roues (notamment vélos, motos), les véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention. En l'espèce, le pneumatique 10 est destiné à un engin agricole, par exemple un tracteur.

Le pneumatique 10 présente un diamètre nominal de jante tel que défini par l'ETRTO (European Tyre and Rim Technical Organisation) compris entre 24 et 54 pouces bornes incluses (entre 60,96 cm et 137,16 cm). Le pneumatique 10 présente un rapport nominal d'aspect tel que défini par l'ETRTO compris entre 0,7 et 0,9 bornes incluses.

Le pneumatique 10 comporte un sommet 12 comprenant une armature de sommet 14 comprenant une ou plusieurs nappes de sommet 16 d'éléments de renfort. L'armature de sommet 14 est surmontée d'une bande de roulement 18. L'armature de sommet 14 est disposée radialement intérieure à la bande de roulement 18. Deux flancs 20 prolongent le sommet 12 radialement vers l'intérieur. Le pneumatique 10 comporte deux bourrelets 22 radialement intérieurs aux flancs 20 et comportant chacun une structure annulaire de renfort 24.

Le pneumatique 10 comporte également une armature de carcasse radiale 26. L'armature de carcasse 26 s'étend depuis les bourrelets 22 à travers les flancs 20 vers le sommet 12. L'armature de carcasse 26 comporte une ou plusieurs nappes de carcasse 28, au moins une de ces nappes de carcasse 28 étant ancrée dans chacun des bourrelets 22 par un retournement 30 autour de la structure annulaire de renfort 24 de manière à former, dans chaque bourrelet 22, un brin aller 32 s'étendant radialement entre chaque bourrelet 22 à travers les flancs 20 et le sommet 12, et un brin retour 34 s'étendant radialement depuis chaque bourrelet 22 à travers chaque flanc 20, l'extrémité radialement externe 36 du brin retour 34 étant située radialement extérieur à la structure annulaire de renfort 24 et axialement extérieur au brin aller 32.

Le pneumatique 10 comprend également une nappe intérieure 38 d'étanchéité agencée radialement et axialement intérieure à l'armature de carcasse 26. La nappe intérieure 38 s'étend entre chaque bourrelet 22, en passant par les flancs 20 et le sommet 12.

Chaque bourrelet 22 comprend, en plus de la structure annulaire de renfort 24, une masse 40 de gomme de bourrage agencée dans un espace délimité par les brins aller 32 et retour 34. Chaque bourrelet 22 comprend également une première masse 42 de gomme de protection du bourrelet 22 suivant le retournement 30 de l'armature de carcasse 26.

De plus, chaque bourrelet 22 comprend de plus une masse 44 de gomme de bourrage agencée axialement extérieur à l'armature de carcasse 26, en particulier axialement extérieur au brin retour 34. Chaque flanc 20 comprend une masse 46 de gomme axialement externe délimitant une surface 48 axialement externe du flanc 20 et agencée axialement extérieur à la masse 44 de gomme de bourrage. Enfin, chaque bourrelet 22 comprend une deuxième masse 50 de protection du bourrelet 22 agencée axialement entre la masse 44 de gomme de bourrage et la masse 46 de gomme axialement externe du flanc 20.

Chaque structure annulaire de renfort 24 comprend une tringle 52 annulaire enrobée dans une masse 54 d'habillage, par exemple comprenant de la gomme. La tringle 52 est agencée radialement intérieur à la masse 40 de gomme de bourrage. La tringle 52 est conforme à un premier mode de réalisation de l'invention.

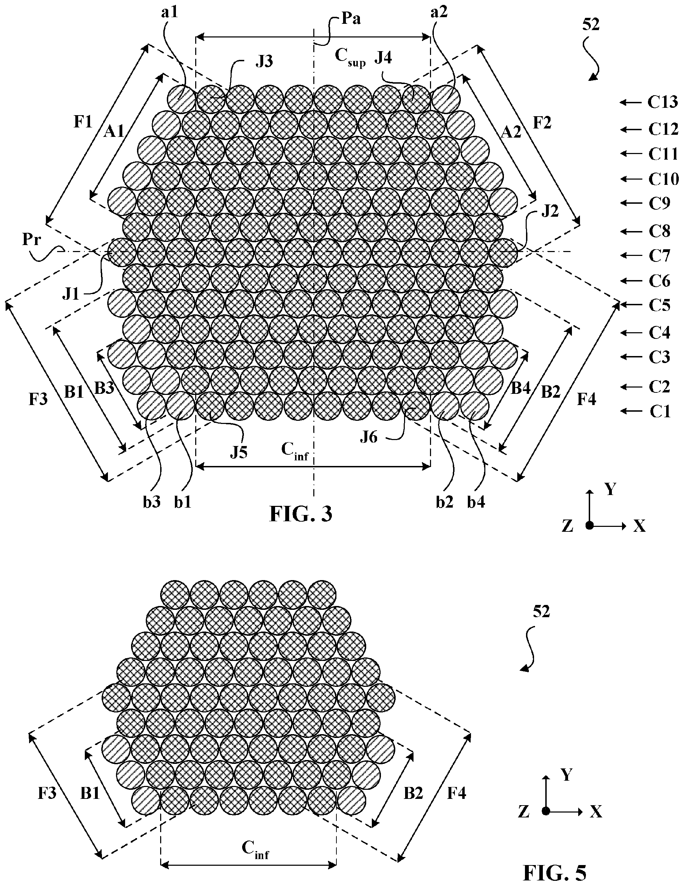

On a représenté sur la figure 3 la tringle 52 selon le premier mode de réalisation de l'invention.

La tringle 52 présente une forme générale de révolution autour de l'axe de révolution du pneumatique 10 qui est sensiblement parallèle à la direction axiale X.

La tringle 52 présente un plan Pa de symétrie axial, c'est-à-dire un plan de symétrie perpendiculaire à la direction axiale X (parallèle au plan médian M).

La tringle 52 comprend P enroulements d'au moins un fil agencés axialement les uns à côté des autres sur N couches Cᵢ radialement superposées les unes sur les autres. La tringle 52 est obtenue par superpositions successives des N couches Cᵢ avec i variant de 1 à N inclus, chaque couche Cᵢ étant obtenue par enroulements axialement successifs d'au moins un fil. Le nombre total d'enroulements P de la tringle 52 est supérieur ou égal à 30, de préférence à 50 et plus préférentiellement à 70, ici P=166.

Dans l'exemple de la figure 3, la tringle 52 comprend P enroulements d'un unique fil. De préférence, le fil est métallique, présente une section sensiblement circulaire et avantageusement un diamètre compris entre 1 et 3,2 mm, de préférence entre 1,2 et 2,2 mm et plus préférentiellement entre 1,2 et 2 mm, ici un diamètre égal à 1,55 mm. Le fil est réalisé dans un acier au carbone comprenant 0,7% en masse de carbone.

La tringle 52 comprend ainsi, en partant de la couche C₁ radialement la plus à l'intérieur jusque vers la couche C_{N} radialement la plus à l'extérieur, N couches radialement successives avec N ≥ 5, de préférence N ≥ 7 et plus préférentiellement N ≥ 9, et ici N=13.

On a rassemblé dans le tableau 1 ci-dessous le nombre d'enroulements Lᵢ de chaque couche Cᵢ. Le nombre maximal d'enroulement max(Lᵢ) parmi les N couches Cᵢ est tel que max(Lᵢ) ≥ 4, de préférence max(Lᵢ) ≥ 6 et plus préférentiellement max(Lᵢ) ≥ 9. Ici, max(Lᵢ)=14. De plus, on a max(Lᵢ)=N-1, max(Lᵢ)=N ou max(Lᵢ)=N+1. Ici, max(Lᵢ)=N+1.

**Tableau 1**

| **Numéro de la couche Ci** | **Nombre d'enroulements Li** | **Numéro de la couche Ci** | **Nombre d'enroulements Li** |
|---|---|---|---|
| C1 | 12 | C8 | 13 |
| C2 | 13 | C9 | 14 |
| C3 | 14 | C10 | 13 |
| C4 | 13 | C11 | 12 |
| C5 | 14 | C12 | 11 |
| C6 | 13 | C13 | 10 |
| C7 | 14 | | |

La tringle 52 comprend au moins une couche Cₖ avec k ∈ ]1, N[ telle que Lₖ₊₁ > Lₖ et Lₖ < Lₖ₋₁. De plus, pour i variant de 1 à N inclus, |Lₖ₊₁ - Lₖ| =1. En outre, pour chaque couche Cₖ avec k ∈ ]1, N[ telle que Lₖ₊₁ > Lₖ et Lₖ < Lₖ₋₁, on a Lₖ₊₁=Lₖ+1 et Lₖ+1=Lₖ₋₁. Ici, chaque couche C₄, C₆ et C₈ comprend L₄=L₆=L₈=13 enroulements et chaque couche C₃, C₅, C₇ et C₉ comprend L₃=L₅=L₇=L₉=14 enroulements.

La tringle 52 comprend une tringle de base 56 dont les enroulements sont représentés sur les différentes figures 3 et 5 à 8 par des cercles remplis par un motif de lignes croisées. La tringle 56 présente un plan Pa de symétrie axial, c'est-à-dire un plan de symétrie perpendiculaire à la direction axiale X (parallèle au plan médian M). La tringle 56 présente également un plan Pr de symétrie radial, c'est-à-dire un plan de symétrie perpendiculaire à la direction radiale Y.

La tringle de base 56 présente une forme hexagonale, c'est-à-dire comprenant six côtés chacun défini par une couches ou un alignement d'enroulements se rejoignant deux à deux à six jonctions J1 à J6 formée chacune par un enroulement commun à une couche et un alignement ou à deux alignements formant la jonction correspondante.

Ainsi, la tringle de base 56 comprend un côté radialement interne défini par une couche C_{inf} radialement interne de N1 enroulements ainsi qu'un côté radialement externe défini par une couche Cₛᵤₚ radialement externe de N1 enroulements. La tringle de base 56 comprend également deux côtés axiaux radialement externes chacun étant défini par un alignement latéral F1, F2 axialement et radialement externe de N2 enroulements. La tringle de base 56 comprend de plus deux côtés axiaux radialement internes, chacun étant défini par un alignement latéral F3, F4 axialement externe et radialement interne de N2 enroulements. Les côtés axiaux radialement externes et internes sont deux à deux opposés axialement l'un par rapport à l'autre, c'est-à-dire opposés l'un à l'autre selon la direction axiale X.

On a N1=N2+1 ou N1=N2 et ici N1=N2+1. En effet, on a N1=8 et N2=7.

Chaque jonction J1, J2 est formée par un enroulement commun entre chaque alignement latéral axialement et radialement externe F1, F2 et chaque alignement latéral axialement externe et radialement interne F3, F4. Chaque enroulement commun formant chaque jonction J1, J2 est dépourvu, axialement à l'extérieur, d'enroulement du fil.

Chaque jonction J3, J4 est formée par un enroulement commun entre chaque alignement latéral axialement et radialement externe F1, F2 et la couche Cₛᵤₚ radialement externe.

Chaque jonction J5, J6 est formée par un enroulement commun entre chaque alignement latéral axialement externe et radialement interne F3, F4 et la couche C_{inf} radialement externe.

La tringle 52 comprend également au moins deux alignements additionnels latéraux A1, A2 axialement et radialement externes de N3 enroulements. Chaque alignement additionnel latéral axialement et radialement externe A1, A2 est sensiblement parallèle respectivement à chaque alignement latéral axialement et radialement externe F1, F2.

Chaque alignement additionnel latéral A1, A2 axialement et radialement externe est agencé axialement à l'extérieur respectivement par rapport à chaque alignement latéral axialement et radialement externe F1, F2. On a ici N3=5.

Dans ce mode de réalisation, chaque alignement additionnel latéral axialement et radialement externe A1, A2 comprend un enroulement radialement externe a1, a2 radialement sensiblement aligné avec la couche radialement externe Cₛᵤₚ.

On a N3≤N2 et de préférence N3=N2, N3+1 =N2 ou N3+2=N2. En l'espèce, on a N3+2=N2.

Dans ce mode de réalisation, la tringle 52 comprend également au moins deux alignements additionnels latéraux B1, B2, B3, B4 axialement externes et radialement internes. La tringle 52 comprend deux paires B1, B2 d'une part, et B3, B4 d'autre part, d'alignements additionnels latéraux axialement externes et radialement internes respectivement de N5 et N6 enroulements. Chaque alignement additionnel latéral axialement externe et radialement interne B1, B3 d'une part, et B2, B4 d'autre part, est sensiblement parallèle respectivement à chaque alignement latéral axialement externe et radialement interne F3, F4.

Chaque alignement additionnel latéral axialement externe et radialement interne B1, B3 d'une part et B2, B4 d'autre part, est agencé axialement à l'extérieur respectivement par rapport à chaque alignement latéral axialement externe et radialement interne B3, F4. Chaque alignement additionnel latéral axialement externe et radialement interne B3, B4 est agencé axialement à l'extérieur respectivement par rapport à chaque alignement additionnel latéral axialement externe et radialement interne B1, B2.

Dans ce mode de réalisation, chaque alignement additionnel latéral axialement externe et radialement interne B1, B2, B3, B4 comprend un enroulement radialement interne b1, b2, b3, b4 radialement sensiblement aligné avec la couche radialement interne C_{inf}.

On a N5≥N6, de préférence N5>N6 et ici N5=N6+2 avec N5=5 et N6=3. On a également N5≤N2, de préférence N5=N2, N5+1=N2 ou N5+2=N2 et ici N5+2=N2.

On a également max(Lᵢ)-N1≤6.

Les enroulements des alignements additionnels latéraux, A1, A2, B1, B2, B3 et B4 sont représentés par des cercles remplis par un motif de lignes parallèles.

### EXEMPLE DE PROCEDE SELON L'INVENTION

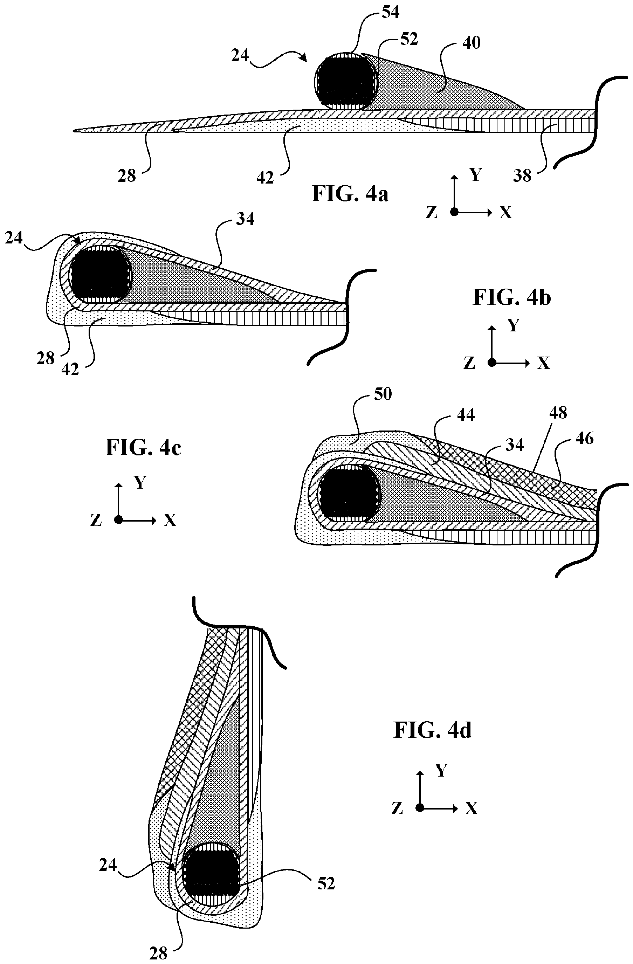

Nous allons maintenant décrire un procédé de fabrication d'un pneumatique selon l'invention en référence aux figures 4a à 4d.

Tout d'abord, dans une première phase d'assemblage, on assemble les différentes nappes, masses de gomme et autres éléments décrits précédemment pour former une ébauche crue sur un tambour d'assemblage connu par ailleurs de l'homme du métier.

Ainsi, on pose successivement et dans cet ordre, la première masse 42 de gomme de protection, la nappe intérieure 38 d'étanchéité, une ou plusieurs nappes de carcasse 28 destinée(s) à être ancrée(s) dans le bourrelet 20, la masse 40 de gomme de bourrage et la structure annulaire de renfort 24 comprenant la tringle 52 et la masse 54 d'habillage. On a ainsi déposé la tringle 52 sur la ou les nappes de carcasses 28. On obtient l'ébauche intermédiaire représentée à la figure 4a.

Puis, on retourne la première masse 42 de gomme de protection et une partie de la ou les nappes de carcasse 28, ici le brin retour 34, autour de la structure annulaire de renfort 24. On obtient alors l'ébauche intermédiaire représentée à la figure 4b.

Ensuite, on pose successivement et dans cet ordre, la masse 44 de gomme de bourrage, la deuxième masse 50 de protection et enfin la masse 46 de gomme axialement externe délimitant la surface 48 axialement externe du flanc 20. On obtient alors l'ébauche intermédiaire représentée à la figure 4c.

Enfin, on fait tourner la ou les nappes de carcasse 28 et la tringle 52 l'une par rapport à l'autre. En l'espèce, on fait tourner l'ensemble de l'ébauche intermédiaire à l'exception de la structure annulaire de renfort 24, autour de cette dernière qui reste sensiblement fixe pendant la rotation. En variante, on pourrait faire tourner la tringle 52 et maintenir le reste de l'ébauche fixe. On obtient alors l'ébauche intermédiaire, représentée à la figure 4d. On remarquera qu'à l'issue de la rotation, la tringle 52 présente la même orientation qu'avant la rotation et que les différentes nappes et masses de gomme n'ont pas été déformées sous l'effet de la rotation.

Dans une deuxième phase ultérieure de finition, on ajoute le sommet 12 et la bande de roulement 18 à l'ébauche intermédiaire précédemment obtenue.

Dans une troisième phase de cuisson, on cuit l'ébauche crue finie de façon à obtenir le pneumatique cuit.

### AUTRES EXEMPLES DE TRINGLES SELON L'INVENTION

On a représenté sur les figures 5, 6, 7 et 8 des tringles selon d'autres modes de réalisation de l'invention. Sur ces figures, les éléments analogues à ceux de la figure 3 sont désignés par des références identiques.

On a représenté sur la figure 5 une tringle selon un deuxième mode de réalisation de l'invention.

A la différence de la tringle selon le premier mode de réalisation, la tringle 52 selon le deuxième mode de réalisation comprend N=9 couches et P=76 enroulements.

On a rassemblé dans le tableau 2 ci-dessous le nombre d'enroulements Lᵢ de chaque couche Cᵢ. On a max(Lᵢ)=N+1=10.

**Tableau 2**

| **Numéro de la couche Ci** | **Nombre d'enroulements Li** | **Numéro de la couche Ci** | **Nombre d'enroulements Li** |
|---|---|---|---|
| C1 | 8 | C6 | 9 |
| C2 | 9 | C7 | 8 |
| C3 | 10 | C8 | 7 |
| C4 | 9 | C9 | 6 |
| C5 | 10 | | |

La tringle 52 comprend au moins une couche Cₖ avec k ∈ ]1, N[ telle que Lₖ₊₁ > Lₖ et Lₖ < Lₖ₋₁. En outre, pour chaque couche Cₖ avec k ∈ ]1, N[ telle que Lₖ₊₁ > Lₖ et Lₖ < Lₖ₋₁, on a Lₖ₊₁₌Lₖ+1 et Lₖ+1=Lₖ₋₁. Ici, la couche C₄ comprend L₄=9 enroulements et chaque couche C₃, C₅ comprend L₃=L₅=10 enroulements.

La tringle de base 56 est telle que N1=N2+1. En effet, on a N1=6, N2=5.

A la différence de la tringle du premier mode de réalisation, la tringle 52 selon le deuxième mode de réalisation comprend seulement une paire d'alignements additionnels latéraux B1, B2 axialement externes et radialement internes de N5=3 enroulements.

On a N5≤N2, de préférence N5=N2, N5+1=N2 ou N5+2=N2 et ici N5+2=N2.

On a également max(Lᵢ)-N1≤6.

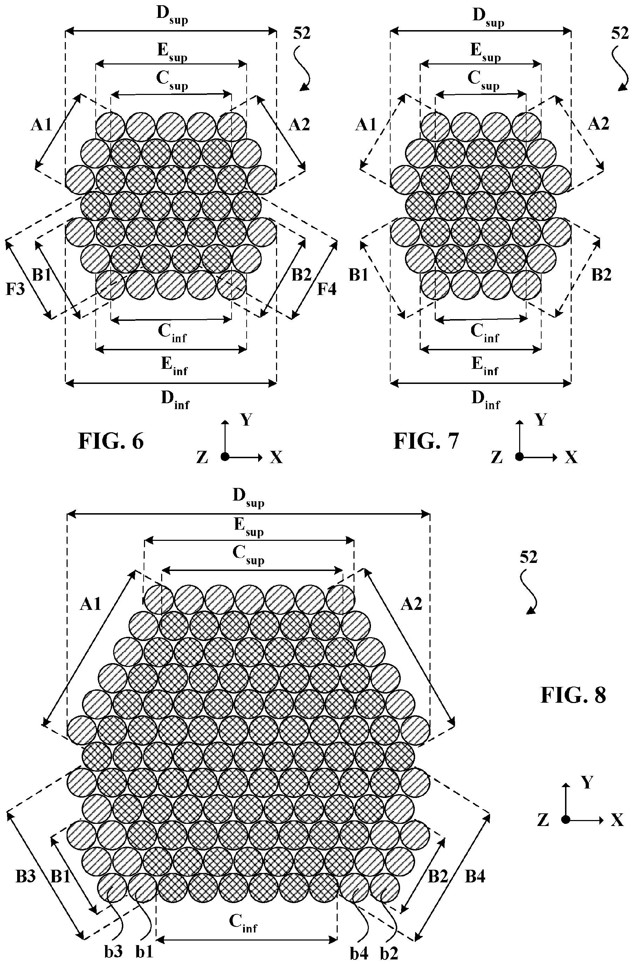

On a représenté sur la figure 6 une tringle selon un troisième mode de réalisation de l'invention.

La tringle 52 selon le troisième mode de réalisation comprend N=7 couches et P=42 enroulements.

On a rassemblé dans le tableau 3 ci-dessous le nombre d'enroulements Lᵢ de chaque couche Cᵢ. On a max(Lᵢ)=N=7.

**Tableau 3**

| **Numéro de la couche Ci** | **Nombre d'enroulements Li** | **Numéro de la couche Ci** | **Nombre d'enroulements Li** |
|---|---|---|---|
| C1 | 5 | C5 | 7 |
| C2 | 6 | C6 | 6 |
| C3 | 7 | C7 | 5 |
| C4 | 6 | | |

La tringle 52 comprend au moins une couche Cₖ avec k ∈ ]1, N[ telle que Lₖ₊₁ > Lₖ et Lₖ < Lₖ₋₁. En outre, pour chaque couche Cₖ avec k ∈ ]1, N[ telle que Lₖ₊₁ > Lₖ et Lₖ < Lₖ₋₁, on a Lₖ₊₁=Lₖ+1 et Lₖ+1=Lₖ₋₁. Ici, la couche C₄ comprend L₄=6 enroulements et chaque couche C₃, C₅ comprend L₃=L₅=7 enroulements.

La tringle 52 selon le troisième mode de réalisation est telle que N1=N2+1. En effet, on a N1=4 et N2=3. On a de plus N3≤N2 et ici N3=N2=3. En outre, on a N4=N1+1 avec N4=5 et N1=4.

A la différence de la tringle selon le premier mode de réalisation, la tringle 52 selon le troisième mode de réalisation comprend au moins une couverture additionnelle Dₛᵤₚ axialement et radialement externe d'enroulements en forme générale de U. Les enroulements de la couverture additionnelle axialement et radialement externe Dₛᵤₚ sont représentés par des cercles remplis par un motif de lignes parallèles.

Les enroulements de la couverture additionnelle axialement et radialement externe Dₛᵤₚ sont agencés axialement à l'extérieur par rapport à chaque alignement latéral axialement externe et radialement à l'extérieur par rapport à la couche radialement externe Cₛᵤₚ.

La couverture additionnelle axialement et radialement externe Dₛᵤₚ comprend une couche additionnelle Eₛᵤₚ radialement externe de N4 enroulements, et sensiblement parallèle à la couche radialement externe Cₛᵤₚ. La couche additionnelle Eₛᵤₚ est radialement agencée à l'extérieur par rapport à la couche radialement externe Cₛᵤₚ. La tringle 52 selon le troisième mode de réalisation est telle que N4=N1+1.

La couverture additionnelle axialement et radialement externe Dₛᵤₚ comprend également deux alignements additionnels latéraux A1, A2 axialement et radialement externes de N3 enroulements. Chaque alignement additionnel latéral A1, A2 est sensiblement parallèle respectivement à chaque alignement latéral axialement et radialement externe F1, F2. Chaque alignement additionnel latéral axialement et radialement externe A1, A2 est agencé axialement à l'extérieur respectivement par rapport à chaque alignement latéral axialement et radialement externe F1, F2.

On a ici N3=4. On a N3≤N2 et ici N3=N2.

En outre, la tringle 52 selon le troisième mode de réalisation comprend au moins une couverture additionnelle D_{inf} axialement externe et radialement interne d'enroulements en forme générale de U. Les enroulements de la couverture additionnelle axialement externe et radialement interne D_{inf} sont représentés par des cercles remplis par un motif de lignes parallèles.

Les enroulements de la couverture additionnelle axialement externe et radialement interne D_{inf} sont agencés axialement à l'extérieur par rapport à chaque alignement latéral axialement interne et radialement externe et radialement à l'intérieur par rapport à la couche radialement interne C_{inf}.

La couverture additionnelle axialement externe et radialement interne D_{inf} comprend une couche additionnelle E_{inf} radialement interne de N7 enroulements, et sensiblement parallèle à la couche radialement interne C_{inf}. La couche additionnelle E_{inf} radialement interne est agencée radialement à l'intérieur par rapport à la couche radialement interne C_{inf}.

La couverture additionnelle axialement externe et radialement interne D_{inf} comprend également deux alignements additionnels latéraux B1, B2 axialement externes et radialement internes de N5 enroulements. Chaque alignement additionnel latéral B1, B2 axialement externe et radialement interne est sensiblement parallèle respectivement à chaque alignement latéral axialement externe et radialement interne F3, F4. Chaque alignement additionnel latéral B1, B2 axialement externe et radialement interne est axialement agencé à l'extérieur respectivement par rapport à chaque alignement latéral axialement externe et radialement interne F3, F4.

On a N5≤N2 et ici N5=N2=3 et N7=N1+1 avec N7=5.

On a également max(Lᵢ)-N1≤6 et de préférence max(Lᵢ)-N1≤2.

On a représenté sur la figure 7 une tringle selon un quatrième mode de réalisation de l'invention.

La tringle 52 selon le quatrième mode de réalisation comprend N=7 couches et P=35 enroulements.

On a rassemblé dans le tableau 4 ci-dessous le nombre d'enroulements Lᵢ de chaque couche Cᵢ. On a max(Lᵢ)=N-1=6.

**Tableau 4**

| **Numéro de la couche Ci** | **Nombre d'enroulements Li** | **Numéro de la couche Ci** | **Nombre d'enroulements Li** |
|---|---|---|---|
| C1 | 4 | C5 | 6 |
| C2 | 5 | C6 | 5 |
| C3 | 6 | C7 | 4 |
| C4 | 5 | | |

La tringle 52 comprend au moins une couche Cₖ avec k ∈ ]1, N[ telle que Lₖ₊₁ > Lₖ et Lₖ < Lₖ₋₁. En outre, pour chaque couche Cₖ avec k ∈ ]1, N[ telle que Lₖ₊₁ > Lₖ et Lₖ < Lₖ₋₁, on a Lₖ₊₁=Lₖ+1 et Lₖ+1=Lₖ₋₁. Ici, la couche C₄ comprend L₄=5 enroulements et chaque couche C₃, C₅ comprend L₃=L₅=6 enroulements.

A la différence de la tringle 52 selon le troisième mode de réalisation, on a N1=N2=3. On a de plus N3≤N2 et ici N3=N2=3. En outre, on a N4=N1+1 avec N4=4 et N1=3. On a aussi N5≤N2 et ici N5=N2=3 et N7=N1+1 avec N7=4.

On a également max(Lᵢ)-N1≤6 et de préférence N1-max(Lᵢ)≤2.

On a représenté sur la figure 8 une tringle selon un cinquième mode de réalisation de l'invention.

La tringle 52 selon le cinquième mode de réalisation comprend N=12 couches et P=35 enroulements. On a N1=N2=6.

On a rassemblé dans le tableau 5 ci-dessous le nombre d'enroulements Lᵢ de chaque couche Cᵢ. On a max(Lᵢ)=N=12.

**Tableau 5**

| **Numéro de la couche Ci** | **Nombre d'enroulements Li** | **Numéro de la couche Ci** | **Nombre d'enroulements Li** |
|---|---|---|---|
| C1 | 10 | C7 | 12 |
| C2 | 11 | C8 | 11 |
| C3 | 12 | C9 | 10 |
| C4 | 11 | C10 | 9 |
| C5 | 12 | C11 | 8 |
| C6 | 11 | C12 | 7 |

La tringle 52 comprend au moins une couche Cₖ avec k ∈ ]1, N[ telle que Lₖ₊₁ > Lₖ et Lₖ < Lₖ₋₁. En outre, pour chaque couche Cₖ avec k ∈ ]1, N[ telle que Lₖ₊₁ > Lₖ et Lₖ < Lₖ₋₁, on a Lₖ₊₁=Lₖ+1 et Lₖ+1=Lₖ₋₁. Ici, chaque couche C₄, C₆ comprend L₄=L₆=11 enroulements et chaque couche C₃, C₅, C₇ comprend L₃=L₅=L₇=12 enroulements.

De façon analogue à la tringle selon les troisième et quatrième modes de réalisation des figures 6 et 7, la tringle 52 selon le cinquième mode de réalisation comprend une couverture additionnelle axialement et radialement externe Dₛᵤₚ d'enroulements en forme générale de U.

La couverture additionnelle axialement et radialement externe Dₛᵤₚ comprend une couche additionnelle Eₛᵤₚ radialement externe de N4 enroulements, et sensiblement parallèle à la couche radialement externe Cₛᵤₚ. La couche additionnelle Eₛᵤₚ radialement externe est agencée radialement à l'extérieur par rapport à la couche radialement externe Cₛᵤₚ.

La couverture additionnelle axialement et radialement externe Dₛᵤₚ comprend également deux alignements additionnels latéraux A1, A2 axialement et radialement externes de N3 enroulements sensiblement parallèles respectivement à chaque alignement F1, F2 axialement et radialement externe. Chaque alignement additionnel latéral A1, A2 axialement externe et radialement interne est axialement agencé à l'extérieur respectivement par rapport à chaque alignement latéral axialement externe et radialement interne F1, F2.

La tringle 52 selon le deuxième mode de réalisation est telle que N3≤N2 et ici N3=N2=6. En outre, on a N4=N1+1 avec N4=7 et N1=6.

De façon analogue à la tringle selon le premier mode de réalisation, la tringle 52 selon le cinquième mode de réalisation comprend également deux paires B1, B2 d'une part, et B3, B4 d'autre part, d'alignements additionnels latéraux axialement externes et radialement internes respectivement de N5 et N6 enroulements.

Dans ce mode de réalisation, chaque alignement additionnel latéral axialement externe et radialement interne B1, B2, B3, B4 comprend un enroulement radialement interne b1, b2, b3, b4 radialement sensiblement aligné avec la couche radialement interne C_{inf}.

Les alignements additionnels latéraux axialement externes et radialement internes d'une part, B1, B2, et d'autre part, B3, B4 sont respectivement sensiblement parallèles à chaque alignement F3, F4 axialement externes et radialement interne.

Chaque alignement additionnel latéral axialement externe et radialement interne B1, B2 d'une part, et B3, B4 d'autre part, est axialement agencé à l'extérieur respectivement par rapport à chaque alignement latéral axialement externe et radialement interne F3, F4.

On a N5≥N6, de préférence N5>N6 et ici N5=N6+2 avec N5=5 et N6=3. On a également N5≤N2 et ici N5+1 =N2.

On a également max(Lᵢ)-N1≤6.

### ESSAIS ET TESTS COMPARATIFS

### Performance du procédé de fabrication

On a représenté sur la figure 9 une tringle 100 de l'état de la technique. Cette tringle ne présente aucune des caractéristiques essentielles à l'invention permettant une rotation relative aisée de la tringle par rapport à la nappe de carcasse.

On a représenté sur la figure 10 un pneumatique 200 de l'état de la technique comprenant une tringle 100 et fabriqué en mettant en oeuvre des étapes analogues aux étapes décrites en références aux figures 4a à 4d. Le pneumatique 200 présente des défauts volontairement exagérés aux fins d'illustration des avantages de l'invention.

On note la présence de la zone de mise en compression du brin retour 34' et des masses de gomme 44', 46' et 50' agencées axialement à l'extérieur du brin retour. La mise en surtension du brin aller 32' entraine une désorganisation des enroulements au contact du brin aller 32' mais également de ceux au contact du brin retour 34'. De plus, la rotation relative est incomplète d'un angle α.

En comparant les figures 2 (ou 4d) et 10, on note que la mise en oeuvre du procédé de fabrication du pneumatique selon l'invention conduit à un pneumatique dépourvu de défauts potentiels contrairement au pneumatique 200.

### Performance de rotation sur jante

On a testé la performance de rotation sur jante de chaque pneumatique. En effet, afin que le pneumatique puisse transférer l'intégralité des efforts exercés par le moteur du véhicule sur le sol, il est préférable que la rotation du pneumatique sur la jante soit la plus faible possible.

On mesure donc le coefficient de frottement µ entre la jante et le pneumatique. Pour cela, on utilise un véhicule de masse totale égale à 2 tonnes pourvu de deux pneumatiques à tester. On tracte alors, sur du bitume, un poids de masse égale, ici 2 tonnes. Entre le poids à tracter et le véhicule, on place un capteur dynamométrique permettant de mesurer la force F, exprimée en kg, exercée par le véhicule sur le poids à tracter lorsque le pneumatique commence à tourner par rapport à la jante. Ainsi, pour une force F=500 kg exercée pour faire tourner le pneumatique par rapport à la jante, on obtient un coefficient de frottement µ=0,5. En fonction de la force relevée, on donne une note comprise entre 0 et 5, 0 indiquant un pneumatique présentant une forte rotation sur jante et 5 indiquant un pneumatique dont la performance de rotation sur jante est maximale. On a rassemblé les résultats de ces tests dans le tableau 6 ci-dessous.

**Tableau 6**

| **Tringle** | **Note** | **Tringle** | **Note** |
|---|---|---|---|
| 100 | 5 | 52 - Fig.6 | 5 |
| 52 - Fig.3 | 5 | 52 - Fig.7 | 4 |
| 52 - Fig. 5 | 5 | 52 - Fig.8 | 5 |

On considère que les notes 4 et 5 traduisent une faible rotation sur jante et donc que les pneumatiques correspondants satisfont le critère requis de performance de rotation sur jante. On remarque que tous les pneumatiques selon l'invention présentent une note supérieure ou égale à 4.

Ainsi, les pneumatiques selon l'invention permettent de s'affranchir de précautions particulières lors du procédé de fabrication et présentent une faible rotation sur jante.

L'invention ne se limite pas aux modes de réalisation précédemment décrits.

Ainsi, la couverture additionnelle axialement externe et radialement interne D_{inf} pourra comprendre plusieurs couches additionnelles E_{inf} radialement internes et sensiblement parallèles à la couche C_{inf} radialement interne ainsi que plusieurs paires d'alignements additionnels latéraux axialement externes et radialement internes.

On pourra combiner les caractéristiques des différents modes de réalisation précédemment décrits dans la mesure où celles-ci sont compatibles entre elles.

## Revendications

1. Tringle (52) pour pneumatique (10) sensiblement de révolution autour d'un axe comprenant plusieurs enroulements d'au moins un fil agencés axialement les uns à côté des autres sur N couches Cᵢ radialement superposées les unes sur les autres, telle qu'elle comprend une tringle hexagonale de base (56) comprenant :
- une couche (Cₛᵤₚ) radialement externe de N1 enroulements,
- une couche (C_{inf}) radialement interne de N1 enroulements,
- deux alignements latéraux (F1, F2) axialement et radialement externes de N2 enroulements opposés axialement l'un par rapport à l'autre,
- deux alignements latéraux (F3, F4) axialement externes et radialement internes de N2 enroulements opposés axialement l'un par rapport à l'autre, avec N1=N2 + 1 ou N1=N2,
- deux jonctions (J1, J2) chacune formée par un enroulement commun entre un alignement latéral axialement et radialement externe (F1, F2) et un alignement latéral axialement externe et radialement interne (F3, F4), chaque enroulement commun formant chaque jonction (J1, J2) étant dépourvu, axialement à l'extérieur, d'enroulement du fil, **caractérisée en ce qu'**elle comprend au moins deux alignements additionnels latéraux (B1, B2, B3, B4) axialement externes et radialement internes, chaque alignement additionnel latéral (B1, B2, B3, B4) axialement externe et radialement interne étant sensiblement parallèle respectivement à chaque alignement latéral (F3, F4) axialement externe et radialement interne.

2. Tringle (52) selon la revendication 1, dans laquelle chaque enroulement radialement interne (b1, b2, b3, b4) de chaque alignement additionnel latéral (B1, B2) axialement externe et radialement interne est radialement sensiblement aligné avec la couche (C_{inf}) radialement interne.

3. Tringle (52) selon la revendication 1, comprenant au moins une couverture additionnelle axialement externe et radialement interne (D_{inf}) d'enroulements en forme générale de U.

4. Tringle (52) selon la revendication précédente, dans laquelle la couverture additionnelle axialement externe et radialement interne (D_{inf}) comprend
- une couche additionnelle (E_{inf}) radialement interne de N7 enroulements, et sensiblement parallèle à la couche (C_{inf}) radialement interne,
- au moins les deux alignements additionnels latéraux (B1, B2, B3, B4) axialement externes et radialement internes.

5. Tringle (52) selon la revendication précédente, dans laquelle N7=N1+1.

6. Tringle (52) selon l'une quelconque des revendications précédentes, dans laquelle chaque alignement additionnel latéral (B1, B2) axialement externe et radialement interne comprenant N5 enroulements, N5≤N2, de préférence N5=N2, N5+1=N2 ou N5+2=N2.

7. Tringle (52) selon l'une quelconque des revendications précédentes, dans laquelle max(Lᵢ)=N-1, max(Lᵢ)=N ou max(Lᵢ)=N+1 avec Lᵢ est le nombre d'enroulements de chaque couche Cᵢ, i variant de 1 à N inclus.

8. Tringle (52) selon l'une quelconque des revendications précédentes, comprenant au moins une couche Cₖ avec k ∈ ]1, N[ telle que Lₖ₊₁ > Lₖ et Lₖ < Lₖ₋₁.

9. Pneumatique (10), **caractérisé en ce qu'**il comprend:
- au moins un bourrelet (22) comprenant au moins une tringle (52) selon l'une quelconque des revendications précédentes,
- une armature de carcasse (26) comprenant au moins une nappe de carcasse (28) ancrée dans chaque bourrelet (22) par un retournement (30) autour de la tringle (52).

10. Procédé de fabrication d'un pneumatique (10) selon la revendication précédente, **caractérisé en ce que** :
- on pose la tringle (52) sur la nappe de carcasse (28),
- on retourne une partie (34) de la nappe de carcasse autour de la tringle (52), et
- on fait tourner la nappe de carcasse (28) et la tringle (52) l'une par rapport à l'autre.

## Patentansprüche

1. Wulstkern (52) für Luftreifen (10), der im Wesentlichen um eine Achse drehsymmetrisch ist, der mehrere Wicklungen mindestens eines Drahts enthält, die axial nebeneinander in N radial übereinander liegenden Schichten Cᵢ angeordnet sind, so dass er einen sechseckigen Basis-Wulstkern (56) enthält, der enthält:
- eine radial äußere Schicht (Cₛᵤₚ) von N1 Wicklungen,
- eine radial innere Schicht (C_{inf}) von N1 Wicklungen,
- zwei axial und radial äußere seitliche Reihen (F1, F2) von N2 Wicklungen, die einander axial gegenüberliegen,
- zwei axial äußere und radial innere seitliche Reihen (F3, F4) von N2 Wicklungen, die einander axial gegenüberliegen, mit N1=N2+1 oder N1=N2,
- zwei Verbindungen (J1, J2), die je von einer gemeinsamen Wicklung zwischen einer axial und radial äußeren seitlichen Reihe (F1, F2) und einer axial äußeren und radial inneren Reihe (F3, F4) gebildet werden, wobei jede jede Verbindung (J1, J2) bildende gemeinsame Wicklung axial außen keine Wicklung des Drahts aufweist,
**dadurch gekennzeichnet, dass** er mindestens zwei zusätzliche axial äußere und radial innere seitliche Reihen (B1, B2, B3, B4) enthält, wobei jede zusätzliche axial äußere und radial innere seitliche Reihe (B1, B2, B3, B4) im Wesentlichen parallel zu jeder axial äußeren und radial inneren seitlichen Reihe (F3, F4) ist.

2. Wulstkern (52) nach Anspruch 1, wobei jede radial innere Wicklung (b1, b2, b3, b4) jeder zusätzlichen axial äußeren und radial inneren seitlichen Reihe (B1, B2) radial im Wesentlichen mit der radial inneren Schicht (C_{inf}) ausgerichtet ist.

3. Wulstkern (52) nach Anspruch 1, der mindestens eine zusätzliche axial äußere und radial innere Abdeckung (D_{inf}) von Wicklungen in der allgemeinen Form eines U enthält.

4. Wulstkern (52) nach dem vorhergehenden Anspruch, wobei die zusätzliche axial äußere und radial innere Abdeckung (D_{inf}) enthält
- eine zusätzliche radial innere Schicht (E_{inf}) von N7 Wicklungen, und im Wesentlichen parallel zur radial inneren Schicht (C_{inf}),
- mindestens die zwei zusätzlichen axial äußeren und radial inneren seitlichen Reihen (B1, B2, B3, B4).

5. Wulstkern (52) nach dem vorhergehenden Anspruch, wobei gilt N7=N1+1.

6. Wulstkern (52) nach einem der vorhergehenden Ansprüche, wobei jede zusätzliche axial äußere und radial innere seitlich Reihe (B1, B2) N5 Wicklungen enthält, mit N5≤N2, vorzugsweise N5=N2, N5+1=N2 oder N5+2=N2.

7. Wulstkern (52) nach einem der vorhergehenden Ansprüche, wobei gilt max(Lᵢ)=N-1, max(Lᵢ)=N oder max(Lᵢ)=N+1, wobei Lᵢ die Anzahl von Wicklungen jeder Schicht Cᵢ ist, wobei i von 1 bis einschließlich N variiert.

8. Wulstkern (52) nach einem der vorhergehenden Ansprüche, der mindestens eine Schicht Cₖ enthält, mit k ∈]1, N[ derart, dass gilt Lₖ₊₁ > Lₖ und Lₖ < Lₖ₋₁.

9. Luftreifen (10), **dadurch gekennzeichnet, dass** er enthält:
- mindestens einen Wulst (22), der mindestens einen Wulstkern (52) nach einem der vorhergehenden Ansprüche enthält,
- eine Karkassenbewehrung (26), die mindestens eine Karkassenlage (28) enthält, die in jedem Wulst (22) durch einen Umschlag (30) um den Wulstkern (52) verankert ist.

10. Verfahren zur Herstellung eines Luftreifens (10) nach dem vorhergehenden Anspruch, **dadurch gekennzeichnet, dass**:
- der Wulstkern (52) auf die Karkassenlage (28) aufgebracht wird,
- ein Teil (34) der Karkassenlage um den Wulstkern (52) umgeschlagen wird, und
- die Karkassenlage (28) und der Wulstkern (52) zueinander gedreht werden.

## Claims

1. Bead wire (52) for a tyre (10) substantially of revolution about an axis comprising several windings of at least one wire which are arranged axially next to one another over N layers Cᵢ radially superposed on one another, the bead wire (52) comprises a basic hexagonal bead wire (56) comprising:
- a radially external layer (Cₛᵤₚ) of N1 windings,
- a radially internal layer (C_{inf}) of N1 windings,
- two axially and radially external lateral rows (F1, F2) of N2 windings axially opposite one another,
- two axially external and radially internal lateral rows (F3, F4) of N2 windings axially opposite one another, with N1=N2 + 1 or N1=N2,
- two junctions (J1, J2) each one formed by a winding that an axially and radially external lateral row (F1, F2) and an axially external and radially internal lateral row (F3, F4) have in common, each winding in common forming each junction (J1, J2) having no winding of the wire axially on the outside of it,
**characterized in that** the bead wire (52) comprises at least two axially external and radially internal additional lateral rows (B1, B2, B3, B4), each axially external and radially interal additional lateral row (B1, B2, B3, B4) being respectively substantially parallel to each axially external and radially internal lateral row (F3, F4).

2. Bead wire (52) according to Claim 1, in which each radially internal winding (b1, b2, b3, b4) of each axially external and radially internal additional lateral row (B1, B2) is radially substantially aligned with the radially internal layer (C_{inf}).

3. Bead wire (52) according to Claim 1, comprising at least one axially external and radially internal additional covering (D_{inf}) of windings in the overall shape of a U.

4. Bead wire (52) according to the preceding claim, in which the axially external and radially internal additional covering (D_{inf}) comprises
- a radially internal additional layer (E_{inf}) of N7 windings, and substantially parallel to the radially internal layer (Cinf),
- at least two axially external and radially internal additional lateral rows (B1, B2, B3, B4).

5. Bead wire (52) according to the preceding claim, in which N7=N1+1.

6. Bead wire (52) according to any one of the preceding claims, in which, with each axially external and radially internal additional lateral row (B1, B2) comprising N5 windings, N5≤N2, preferably N5=N2, N5+1 =N2 or N5+2=N2.

7. Bead wire (52) according to any one of the preceding claims, in which max(Lᵢ)=N-1, max(Lᵢ)=N or max(Lᵢ)=N+1 where Lᵢ is the number of windings of each layer Cᵢ, i varying from 1 to N inclusive.

8. Bead wire (52) according to any one of the preceding claims, comprising at least one layer Cₖ where k ∈ ]1, N[ such that Lₖ₊₁ > Lₖ and Lₖ < Lₖ₋₁.

9. Tyre (10), **characterized in that** it comprises:
- at least one bead (22) comprising at least one bead wire (52) according to any one of the preceding claims,
- a carcass reinforcement (26) comprising at least one carcass ply (28) anchored in each bead (22) by a turnup (30) around the bead wire (52).

10. Method of manufacturing a tyre (10) according to the preceding claim, **characterized in that:**
- the bead wire (52) is placed on the carcass ply (28),
- part (34) of the carcass ply is folded around the bead wire (52), and
- the carcass ply (28) and the bead wire (52) are turned relative to one another.
